# EUROPEAN PATENT APPLICATION

(11) **EP 4 183 755 A1**
(43) Date of publication of application: **24.05.2023**
(21) Application number: 22216534.2
(22) Date of filing: 10.04.2020
(51) Int. Cl.: C03C 27/06, E06B 3/66

(54) **GLASS UNIT**

(30) Priority: 10.04.2019 JP 2019075198
(62) Divisional of application: 20787863.8
(71) Applicant: NIPPON SHEET GLASS COMPANY, LIMITED, Tokyo 108-6321 (JP)
(72) Inventor: NAKAZAWA, Tatsuhiro, Tokyo, 1086321 (JP); KATO, Hidemi, Tokyo, 1086321 (JP)
(74) Representative: Mewburn Ellis LLP

(57) **Abstract**

A glass unit according to the present invention includes a first glass plate, a second glass plate that is arranged facing the first glass plate with a predetermined interval therebetween and forms an internal space with the first glass plate, a sealing member that seals a gap at peripheral edges of the first glass plate and the second glass plate, and a plurality of spacers arranged between the first glass plate and the second glass plate. The internal space has been depressurized to a vacuum state, or a predetermined gas has been injected into the internal space. The first and second glass plates each have a thickness of 5 mm or less, the pitch of the spacers is 15 mm or more, and the difference between the height of the highest spacer and the height of the lowest spacer is 0.01 mm or less.

## Description

### Technical Field

The present invention relates to a glass unit.

### Background Art

In recent years, glass units formed using multiple layers of glass have often been adopted for windowpanes in buildings and the like. In such a glass unit, as described in Patent Literature 1 for example, a decompressed internal space is formed between two or more glass plates, and a plurality of spacers that support the glass plates are arranged in the internal space.

### Citation List

### Patent Literature

Patent Literature 1: JP 2003-321255A

### Summary of Invention

### Technical Problem

The spacers described above are adhered to the glass plates using an adhesive, or instead of using an adhesive, they are fixed by pressing force from the two glass plates . In either case, if the spacers and the glass plates are not sufficiently fixed, the spacers may separate from the two glass plates. If such separation of the spacers occurs, the glass plates may come into contact with each other. The present invention has been made to solve such a problem, and an object of the present invention is to provide a glass unit that can prevent the separation of the spacers.

### Solution to Problem

Item 1: A glass unit comprising:
a first glass plate;
a second glass plate that is arranged facing the first glass plate with a predetermined interval therebetween and forms an internal space with the first glass plate;
a sealing member that seals a gap at peripheral edges of the first glass plate and the second glass plate; and
a plurality of spacers arranged between the first glass plate and the second glass plate,
wherein the internal space has been depressurized to 50.7 KPa or less,
the first and second glass plates each have a thickness of 5 mm or less,
a pitch of the spacers is 15 mm or more, and
a difference between a height of a highest spacer and a height of a lowest spacer is 0.01 mm or less.

Item 2: A glass unit comprising:
a first glass plate;
a second glass plate that is arranged facing the first glass plate with a predetermined interval therebetween and forms an internal space with the first glass plate;
a sealing member that seals a gap at peripheral edges of the first glass plate and the second glass plate; and
a plurality of spacers arranged between the first glass plate and the second glass plate,
wherein the internal space has been depressurized to 50.7 KPa or less,
the first and second glass plates each have a thickness of 3.1 mm or less, and
a pitch of the spacers is 20 mm or more.

Item 3: The glass unit according to item 1 or 2, wherein each of the spacers is in direct contact with at least one of the first glass plate and the second glass plate.

Item 4: The glass unit according to any one of items 1 to 3, wherein the spacers each have a height of 0.1 to 0.5 mm.

Item 5: The glass unit according to any one of items 1 to 4, wherein the internal space has been depressurized to 2.67 Pa or less.

Item 6: The glass unit according to any one of items 1 to 5, wherein a pitch of the spacers is 20 mm or more, and the spacers each have a diameter of 0.5 mm or less.

Item 7: The glass unit according to any one of items 1 to 6, wherein the Young' s modulus of at least one spacer adjacent to the sealing member is 100 GPa or more.

Item 8: The glass unit according to any one of items 1 to 7, wherein the spacers each have a cross-sectional area of 0.03 mm² or more.

### Advantageous Effects of Invention

The glass unit according to the present invention makes it possible to prevent the separation of the spacers.

### Brief Description of Drawings

FIG. 1 is a plan view showing an example of a glass unit according to the present invention.
FIG. 2 is a cross-sectional view of FIG. 1.
FIG. 3 is a plan view showing an example of a cover on which an adhesive is provided.
FIG. 4 is a graph showing the relationship between the spacer pitch and the minimum distance between glass plates in glass units that include glass plates having different thicknesses.
FIG. 5 is a cross-sectional view illustrating a flexed state of the glass plates when the spacer pitch is 30 mm.
FIG. 6 is a cross-sectional view illustrating a flexed state of the glass plates when the spacer pitch is 40 mm.
FIG. 7 is a schematic cross-sectional view showing a manufacturing process for the glass unit of FIG. 1.
FIG. 8 is a plan view of a protective plate.
FIG. 9 is a graph showing the relationship between the thermal conductivity of the spacers and the thermal transmission coefficient of the glass unit when the spacer pitch is 20 mm.
FIG. 10 is a graph showing a relationship between the thermal conductivity of the spacers and the thermal transmission coefficient of the glass unit when the spacer pitch is 15 mm.
FIG. 11 is a plan view showing another example of a spacer.
FIG. 12 is a side view of FIG. 11.
FIG. 13 is a side view showing another example of a spacer.
FIG. 14 is a plan view showing another example of a spacer.
FIG. 15 is a plan view showing another example of a spacer.
FIG. 16 is a cross-sectional view of FIG. 15.
FIG. 17 is a plan view showing another example of a spacer.
FIG. 18 is a plan view showing another example of a spacer.
FIG. 19 is a plan view showing another example of a spacer.
FIG. 20 is a side view showing another example of a spacer.
FIG. 21 is a cross-sectional view showing another example of a spacer.
FIG. 22 is a cross-sectional view showing another example of a spacer.
FIG. 23 is a cross-sectional view showing another example of a spacer.

### Description of Embodiments

### 1. Overview of glass unit

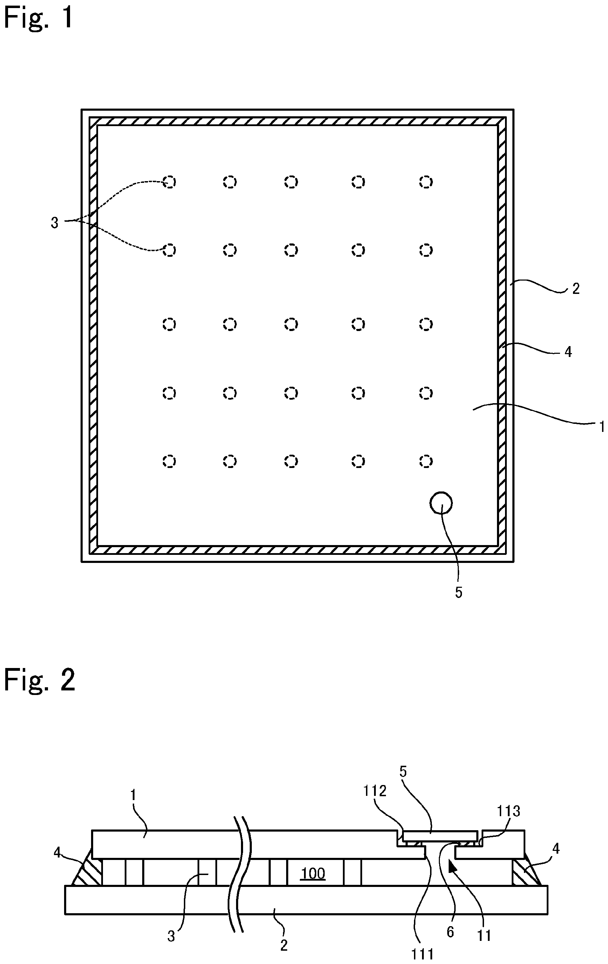

Hereinafter, an embodiment of a glass unit according to the present invention will be described with reference to the drawings. FIG. 1 is a plan view of the glass unit according to the present embodiment, and FIG. 2 is a cross-sectional view of FIG. 1. As shown in FIGS. 1 and 2, the glass unit according to the present embodiment includes two rectangular glass plates, namely a first glass plate 1 and a second glass plate 2. In the present embodiment, the second glass plate 2 shown on the lower side in FIG. 2 is formed slightly larger than the first glass plate 1. A plurality of spacers 3 are arranged between the two glass plates 1 and 2, and the spacers 3 form a gap at predetermined intervals between the two glass plates 1 and 2. Also, the gap between the peripheral edges of the two glass plates 1 and 2 is sealed by a sealing member 4, thus forming a sealed internal space 100 between the two glass plates 1 and 2. Also, a through hole 11 is formed in the first glass plate 1, and a plate-shaped cover 5 for sealing the through hole 11 is provided. The cover 5 is fixed to the first glass plate 1 via an adhesive 6. Hereinafter, the various members will be described.

### 2. First glass plate and second glass plate

There are no particular limitations on the material constituting the first glass plate 1, and a known glass plate can be used. For example, depending on the application, it is possible to use various types of glass plates constituted by template glass, frosted glass given a light diffusing function through surface treatment, wired glass, a wire-reinforced glass plate, tempered glass, double-strengthened glass, low-reflection glass, a highly transparent glass plate, a ceramic glass plate, special glass having a heat ray or ultraviolet absorbing function, or a combination of the aforementioned types. The thickness of the first glass plate 1 is not particularly limited, but is preferably 0.3 to 5 mm, more preferably 0.5 to 4 mm, and particularly preferably 1.0 to 3.1 mm, for example.

The above-mentioned through hole 11 is formed in an end portion of the first glass plate 1. The through hole 11 has a small diameter portion 111 arranged on the internal space 100 side and a large diameter portion 112 that is continuous with the small diameter portion 111 and is open to the outside. The small diameter portion 111 and the large diameter portion 112 are formed in a coaxial cylindrical shape, and the inner diameter of the large diameter portion 112 is larger than that of the small diameter portion 211. Therefore, an annular step 113 that faces the outside is formed between the large diameter portion 112 and the small diameter portion 111.

The inner diameter of the small diameter portion 111 can be, for example, 1.0 to 3.0 mm. On the other hand, the inner diameter of the large diameter portion 112 is larger than that of the small diameter portion 111, and can be 5 to 15 mm. Setting the inner diameter to 5 mm or more makes it possible to accordingly ensure the small diameter portion 111, and therefore air can be efficiently discharged when the internal space 100 is depressurized, as will be described later. Also, as will be described later, it is possible to ensure space for the step 113 on which the adhesive 6 is placed, thereby preventing the adhesive 6 from blocking the small diameter portion 111 before melting. On the other hand, setting the inner diameter to 15 mm or less enables making the through hole 11 inconspicuous.

Also, the difference in diameter between the large diameter portion 112 and the small diameter portion 111 can be, for example, 3 to 20 mm. Setting the diameter difference to 3 mm or more makes it possible to appropriately ensure space for arranging the adhesive 6, as will be described later. Also, if the difference in diameter is too large, the appearance will be poor, and therefore it is preferable to set the upper limit to 20 mm.

Also, the depth of the large diameter portion 112, that is to say the length in the axial direction, can be set to 0.5 to 1.5 mm, for example.

The second glass plate 2 can be formed from the same material as the first glass plate 1, and can be given a similar thickness as well. As described above, the second glass plate 2 is slightly larger than the first glass plate 1, the sealing member 4 mentioned above is arranged at the peripheral edge portion of the second glass plate 2 that protrudes beyond the first glass plate 1, and the gap between the peripheral edges of the two glass plates 1 and 2 is sealed by the sealing member 4.

Also, the glass plates 1 and 2 may each be a glass plate that has been strengthened by chemical strengthening, air-cooled strengthening, or the like. In particular, since the second glass plate 2 is not provided with through holes, it is possible to prevent the extent of strengthening from decreasing in the later-described step for heating the sealing member and the adhesive, and therefore strengthening may be performed. Although air-cooled strengthening is more advantageous than chemical strengthening from the viewpoint of cost, the extent of strengthening may decrease in the later-described step for heating the sealing member 4 and the adhesive 6. On the other hand, chemical strengthening can suppress a decrease in the extent of strengthening even in the heating step.

### 3. Cover and adhesive

The cover 5 is formed in a disk shape, and the outer diameter thereof is smaller than that of the large diameter portion 112 of the through hole 11 of the first glass plate 1 and larger than that of the small diameter portion 111. Therefore, the cover 5 is arranged on the step 113 between the large diameter portion 112 and the small diameter portion 111. As will be described later, air is sucked from between the cover 5 and the through hole 11 in a depressurizing step, and therefore a gap is required between the outer peripheral surface of the cover 5 and the inner peripheral surface of the large diameter portion 112. For this reason, it is preferable that the cover 5 has an outer diameter that is 0.2 to 1.5 mm smaller than the inner diameter of the large diameter portion 112.

Also, the thickness of the cover 5 is smaller than the depth of the large diameter portion 112, and the difference between the depth of the large diameter portion 112 and the thickness of the cover 5 is preferably 0.4 to 0.7 mm, for example. As will be described later, the upper surface of the cover 5 is arranged on substantially the same plane as the upper surface of the first glass plate 1, and therefore the difference between the depth of the large diameter portion 112 and the thickness of the cover 5 is equal to the thickness of adhesive 6 mentioned above. Accordingly, if this difference is smaller than 0.4 mm for example, the thickness of the adhesive 6 decreases, and therefore there is a risk of a decrease in the adhesive strength. On the other hand, if this difference is larger than 0.7 mm, the thickness of the adhesive 6 increases, but with this configuration, the heat for later-described melting of the adhesive 6 is not uniformly transferred to the adhesive 6, and there is a risk of a decrease in the adhesive strength. Also, the thickness of the cover 5 or the thickness of the first glass plate 1 decreases, which can possibly lead to cracking.

There are no particular limitations on the material constituting the cover 5 as long as it is non-breathable and has a melting point higher than the heating temperature at which the adhesive 6 and the sealing member 4 are melted, but it is preferable that the cover 5 is formed using a material that has the same coefficient of thermal expansion as the first glass plate 1, and it is particularly preferable to use the same material as the first glass plate 1. Accordingly, the difference in thermal expansion between the cover 5 and the adhesive 6 and the difference in thermal expansion between the first glass plate 1 and the adhesive 6 can be made the same, and it is possible to prevent the first glass plate 1 and the cover 5 from cracking in the later-described manufacturing process.

There are no particular limitations on the adhesive 6 as long as the cover 5 can be adhered to the first glass plate 1, but for example, an adhesive containing low melting point glass or metal solder can be used. The low melting point glass can be lead-based, tin phosphate-based, bismuth-based, or vanadium-based, for example. The low melting point glass can contain a filler or the like as an additive. Also, the low melting point glass may be either crystalline or non-crystalline. A non-crystalline low melting point glass foams in the depressurizing step as described later, but can easily fix the cover 5 due to having good fluidity. On the other hand, a crystalline low melting point glass is not likely to foam in the depressurizing step and therefore has high sealing performance, but may have low fluidity.

Also, the adhesive 6 is melted and then cooled and allowed to solidify as will be described later, and in order to prevent the first glass plate 1 from cracking due to shrinkage of the adhesive 6 during solidification, it is preferable that the difference between the coefficient of thermal expansion of the first glass plate 1 and the coefficient of thermal expansion of the adhesive 6 is 20×10⁻⁷ mm/°C or less when the temperature is raised from room temperature to 300°C for example. Note that if the adhesive 6 contains glass as described above, the difference in the coefficient of thermal expansion can be particularly small due to having the same quality as the first glass plate 1 that is the adhesion target. Accordingly, when the adhesive 6 is heated and fixed for example, the difference in the coefficient of thermal expansion from that of the first glass plate 1 is small, and therefore cracking can be suppressed.

The thickness of the adhesive 6 is set to the difference between the depth of the large diameter portion 112 and the thickness of the cover 5 when the final product is obtained. As will be described later, the adhesive 6 is heated so as to melt and then cooled so as to solidify. For this reason, the thickness of the adhesive 6 before heating can larger than that after heating. Also, when the adhesive 6 is heated and melted, there are also cases where the adhesive 6 expands due to the ingress of air, for example. In such a case, the thickness of the adhesive 6 before heating can be smaller than that after heating.

Also, the adhesive 6 may be directly provided on the step 113 of the through hole 11, or a configuration is possible in which it is provided on the cover 5 in advance, and then the cover 5 is attached to the through hole 11. In this case, the adhesive 6 can be fixed to the cover 5 by temporary firing. For example, if bismuth-based low melting point glass is used as the adhesive 6, it can be temporarily fired at about 420 to 460°C. Alternatively, it can be attached to the cover 5 by printing with use of an inkjet or the like. In the case of printing, the thickness of the adhesive 6 can be 0.2 mm or less, for example.

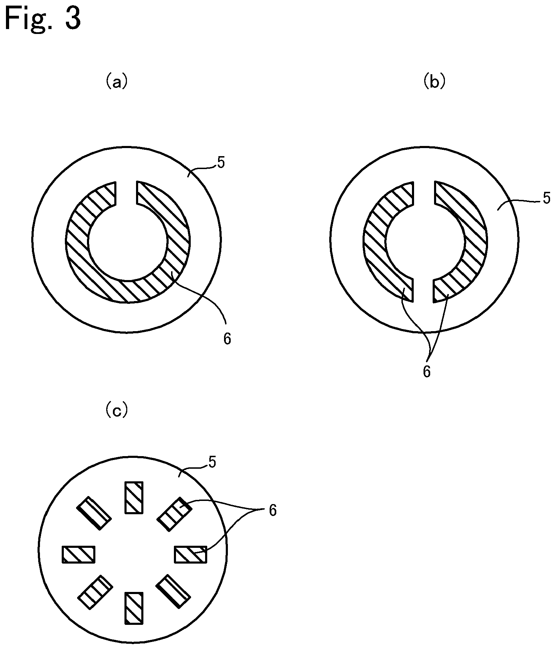

The position and shape of the adhesive 6 need only be set to allow arrangement on the step 113 of the through hole 11, but it is particularly preferable to form the adhesive 6 in an annular shape. Note that in order to ensure an air passage in the depressurizing step as will be described later, it is preferable to use a discontinuous annular shape having at least one gap, such as a C-shape ((a) in FIG. 3), a combination of arcs arranged at intervals ((b) in FIG. 3), or lines arranged radially ((c) in FIG. 3).

### 4. Sealing member

The sealing member 4 can be formed using the same material as that of the adhesive 6. For example, it is preferable to use non-crystalline low melting point glass as the sealing member 4 because the fluidity is high and the sealing member 4 can easily flow in the gap between the two glass plates 1 and 2. In this case, in order to improve the sealing performance, it is preferable that the sealing member 4 extends 2 to 7 mm inward from the end surface of the first glass plate 1, for example.

As described above, low melting point glass or metal solder can be used as the sealing member 4, but if the manufacturing process described later is adopted, the melting point of the adhesive 6 needs to be higher than the melting point of the sealing member 4. For example, if both the adhesive 6 and the sealing member 4 are the same type of low melting point glass, the amount of low melting point glass and the amount of the additive filler of the adhesive 6 can be adjusted in order to set the melting point higher than the melting point of the sealing member 4.

From this point of view, is low melting point glass is used as the sealing member 4 for example, metal solder having a lower melting point than the low melting point glass cannot be used as the adhesive 6. On the other hand, although metal solder can be used as both the sealing member 4 and the adhesive 6, it is necessary to adjust the adhesive 6 so that the melting point is higher as described above.

### 5. Spacer

Because the internal space 100 of the glass unit is depressurized, the two glass plates 1 and 2 that sandwich the internal space 100 are suctioned toward each other and flex toward the internal space. Due to this flexing, the two glass plates 1 and 2 can possibly come into contact with each other. In order to prevent this, the spacers 3 are arranged between the two glass plates 1 and 2, and the distance between the two glass plates 1 and 2 is kept constant.

The spacers 3 are each shaped as a circular column, but alternatively can be shaped as a polygonal column. The spacer 3 can be formed from various materials, examples of which include a ceramic such as cordierite, mullite, or zirconia, a resin such as PTFE (polytetrafluoroethylene), PEEK (polyether ether ketone), or PI (polyimide), and glass, but there is no particular limitation to these examples. However, it is preferable to use a material that does not contain a carbon component. This is because if the spacer 3 contains a carbon component, a gas may be released from the spacer 3 into the internal space 100 over time, which may make it impossible to maintain the depressurized state. Also, due to the release of the gas, the thermal transmission coefficient of the glass unit may increase, and the heat insulating performance may decrease.

Also, it is preferable that the spacer 3 is formed from a material that has a high Young's modulus. This is because given that the spacer needs to play the role of supporting the glass plates 1 and 2, the less the spacer 3 shrinks due to stress when supporting the glass plates 1 and 2, the more firmly the glass plates 1 and 2 can be supported. In view of this, the spacer 3 is preferably formed from a ceramic such as cordierite, mullite, or zirconia.

As described above, the spacers 3 need to have a certain degree of strength due to being sandwiched between the two glass plates 1 and 2. In view of this, although the compressive strength of the spacers 3 depends on a pitch P of the spacers 3, the compressive strength is preferably 200 MPa or more, more preferably 400 MPa or more, still more preferably 3000 MPa or more, and particularly preferably 4000 MPa or more.

Also, the Young's modulus of the spacers 3 that are adjacent to the sealing member 4 is preferably high, that is to say is preferably 100 GPa or more. The following are reasons for this. For example, the spacers 3 that are not adjacent to the sealing member 4 have spacers 3 arranged on both sides thereof, and therefore the spacers 3 on both sides are similarly subjected to compression force in depressurization and are compressed in a similar manner. For this reason, the spacers 3 that have spacers 3 are arranged on both sides thereof are not likely to become separated. In contrast, the sealing member 4 is not likely to shrink even when depressurization is performed, and therefore if the spacers 3 that are adjacent to the sealing member 4 shrink more than the sealing member 4 due to depressurization, those spacers 3 may become separated. Accordingly, it is preferable that the spacers 3 that are adjacent to the sealing member 4 have a high Young's modulus and do not shrink easily.

Note that if the spacers 3 are made of zirconia, which is a brittle material, for example, it is preferable that the spacers 3 have a fracture toughness value K_{IC} of 1.0 MPa·m^{1/2} or more. The fracture toughness value is measured according to JIS R1607 in the case of ceramics and glass, according to JIS G0564 in the case of metals, and according to ISO 13586 in the case of resins.

There are no particular limitations on the method of arranging the spacers 3, but it is preferable that the spacers 3 are arranged in a grid pattern. Note that in the following, unless otherwise specified, it is assumed that the spacers 3 are arranged in a grid pattern. The pitch of the spacers 3 is preferably 15 mm or more, and more preferably 20 mm or more. Although described in more detail later, this is done from the viewpoint of preventing the loss of the spacers. Also, as the pitch of the spacers 3 increases, the number of spacers arranged in the glass unit decreases, which also has an effect of making it possible to reduce the thermal transmission coefficient, as will be described later. On the other hand, the upper limit is preferably 60 mm or less, more preferably 40 mm or less, and particularly preferably 30 mm or less. This is because if the pitch is increased, the amount of flexing of the glass plates increases, which may allow the two glass plates to come into contact with each other. Also, it is possible to prevent the spacers 3 from separating, thus reducing the strength required from the glass plates 1 and 2, and therefore the glass plates 1 and 2 can be made thinner.

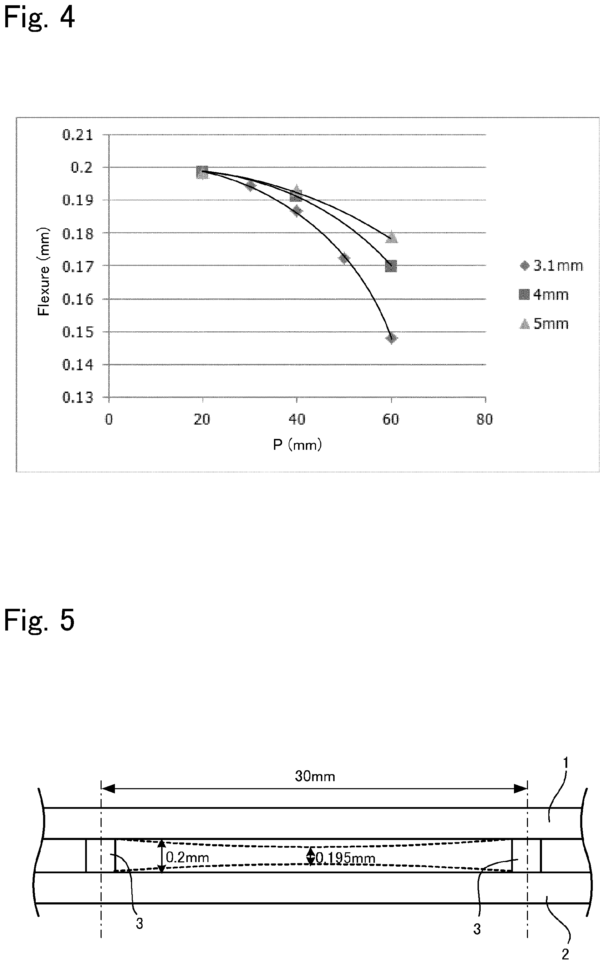

There are no particular limitations on the cross-sectional shape of the spacers 3, and various shapes such as polygons or a circle can be employed. However, a circular cross section is preferable due to making it possible to be processed with a lathe. This is because machining with a lathe is highly accurate. Also, although there are no particular limitations on the diameter (outer diameter) of the spacers 3, it is preferably 0.1 mm or more and 0.4 mm or less, and more preferably 0.2 mm or more and 0.3 mm or less. This is because if the diameter of the spacers 3 is too large, the area of contact with the glass plates 1 and 2 is large, and the heat insulating performance of the glass unit deteriorates. In particular, if the diameter of the spacers 3 exceeds 0.4 mm, flexing as shown in FIG. 4 described later is unlikely to occur, and therefore the diameter is preferably 0.4 mm or less. On the other hand, if the diameter of the spacers 3 is too small, the sound insulation performance of the glass unit deteriorates. Also, if the diameter of the spacers 3 is large, the amount of flexing of the glass plates 1 and 2 is small, which contributes to preventing the loss of spacers. Note that if the preferable range of the cross-sectional area of the spacers 3 is defined by conversion from the diameter of the spacers 3 described above, for example, the preferable range is preferably 0.008 mm² or more and 0.13 mm² or less, and further preferably 0.03 mm² or more and 0.07 mm² or less.

The height of the spacers 3 can be 0.1 to 2.0 mm, and more preferably 0.1 to 0.5 mm, for example. The height of the spacers 3 is the distance between the glass plates 1 and 2, that is to say, the thickness of the internal space 100, but the height of the spacers 3 may vary. In the present embodiment, the variation in the height of the spacers 3 is set as follows.

Condition 1: In the case where the thickness of the two glass plates 1 and 2 is 5 mm or less and the spacer pitch is 15 mm or more, the difference between the height of the highest spacer 3 and the height of the lowest spacer 3 can be set to 0.01 mm or less.

Condition 2: In the case where the thickness of the two glass plates 1 and 2 is 3.1 mm or less and the spacer pitch is 20 mm or more, the difference between the height of the highest spacer 3 and the height of the lowest spacer 3 can be set to 0.02 mm or less.

The reasons for this will be described below with reference to FIGS. 4 and 5. First, Condition 1 will be examined. FIG. 4 is a graph showing the relationship between the pitch P of the spacers 3 and the minimum distance between the two glass plates when the pressure in the internal space is 50.7 KPa in glass units that use glass plates having three different thicknesses. The height of the spacers 3 in each glass unit is 0.2 mm. According to this graph, for example, in the case where the thickness of both the first glass plate 1 and the second glass plate 2 is 5 mm and the pitch P of the spacers 3 is 30 mm, the minimum distance between the two glass plates 1 and 2 is approximately 0.195 mm. In other words, as shown in FIG. 5, when the pitch P of the spacers 3 is 30 mm, the two glass plates 1 and 2 flex between adjacent spacers 3 by a total of about 0.005 mm, and the minimum distance between the two glass plates 1 and 2 is approximately 0.195 mm.

Accordingly, when the spacer pitch is 15 mm, if spacers with a height of 0.195 mm are arranged, the spacers will come into contact with the two glass plates. As shown in FIG. 4, the larger the spacer pitch is, the greater the amount of flexing of the glass plates is, and therefore in the case where the spacer pitch is 15 mm or more, if spacers with a height of 0.195 mm or more are arranged, the spacers will definitely come into contact with the two glass plates. Accordingly, if the thickness of the glass plates is 5 mm or less and the spacer pitch is 15 mm or more, the height of the spacers is preferably 0.195 mm or more.

However, the heights of the spacers vary, and in view of this, if the difference between the height of the highest spacer 3 and the height of the lowest spacer 3 is 0.01 mm or less, the spacers 3 arranged at the positions where the two glass plates 1 and 2 are closest to each other will come into contact with the two glass plates 1 and 2. However, if the heights of the spacers 3 vary a large amount and the difference between the height of the highest spacer 3 and the height of the lowest spacer 3 exceeds 0.01 mm, the spacers 3 arranged at the positions where the two glass plates 1 and 2 are closest to each other may not come into contact with the two glass plates 1 and 2. In other words, such spacers 3 may come into contact with only one out of the two glass plates 1 and 2.

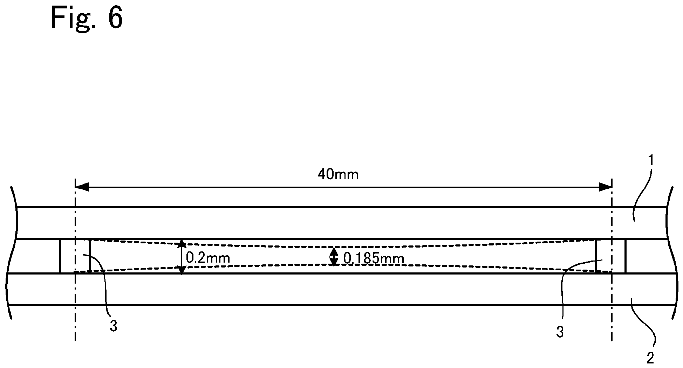

Next, Condition 2 will be examined. As shown in FIG. 4, for example, in the case where the thickness of both the first glass plate 1 and the second glass plate 2 is 3.1 mm, when the pitch P of the spacers 3 is 40 mm, the minimum distance between the two glass plates 1 and 2 is set to approximately 0.185 mm. In other words, as shown in FIG. 6, when the pitch P of the spacers 3 is 40 mm, the two glass plates 1 and 2 flex between adjacent spacers 3 by a total of about 0.015 mm, and the minimum distance between the two glass plates 1 and 2 is approximately 0.185 mm. Under Condition 2, the thickness of the glass plates is smaller than that of Condition 1, but when the thickness of the glass plate is small, the amount of flexing increases. However, when the pitch of the spacers 3 is 30 mm, the amount of flexing hardly changes even if the thickness of the glass plates 1 and 2 is small, but if the pitch is large such as 40 mm or more, the amount of flexing increases.

Accordingly, when the spacer pitch is 20 mm, if spacers with a height of 0.185 mm are arranged, the spacers will come into contact with the two glass plates. As shown in FIG. 4, the larger the spacer pitch is, the greater the amount of flexing of the glass plates is, and therefore in the case where the spacer pitch is 20 mm or more, if spacers with a height of 0.185 mm or more are arranged, the spacers will definitely come into contact with the two glass plates. Accordingly, if the thickness of the glass plates is 3.1 mm or less and the spacer pitch is 20 mm or more, the height of the spacers is preferably 0.185 mm or more.

However, the heights of the spacers vary, and in view of this, if the difference between the height of the highest spacer 3 and the height of the lowest spacer 3 is 0.02 mm or less, the spacers 3 arranged at the positions where the two glass plates 1 and 2 are closest to each other will come into contact with the two glass plates 1 and 2. However, if the heights of the spacers 3 vary a large amount and the difference between the height of the highest spacer 3 and the height of the lowest spacer 3 exceeds 0.02 mm, the spacers 3 arranged at the positions where the two glass plates 1 and 2 are closest to each other may not come into contact with both of the two glass plates 1 and 2, and may come into contact with only one of the two glass plates 1 and 2. Note that, even in the case where the thickness of the two glass plates 1 and 2 is 3.1 mm or less, if the pitch of the spacers 3 is approximately 15 mm, the difference between the height of the highest spacer 3 and the height of the lowest spacer 3 can be 0.01 mm or less similarly to Condition 1.

It should be noted that there are several methods for fixing the spacers 3 to the glass plates 1 and 2, and one of them is a method for fixing the spacers 3 to the two glass plates 1 and 2 with use of an adhesive. Specifically, the spacers 3 come into contact with the glass plates 1 and 2 via the adhesive. Also, instead of being adhered to the two glass plates 1 and 2, there is a method in which the spacers 3 are fixed to the glass plates 1 and 2 by being pressed by the glass plates 1 and 2 that are suctioned due to the effect of the internal space 100 that is in a depressurized state. In other words, the spacers 3 comes into direct contact with the glass plates 1 and 2. Accordingly, in the case where an adhesive is not used, if a spacer 3 comes into contact with only one of the glass plates 1 and 2 as described above, this means that the spacer 3 cannot be fixed in a predetermined position. In other words, the spacer 3 can become lost. If a spacer 3 becomes separated, the two glass plates 1 and 2 that are suctioned by the internal space 100 in the depressurized state cannot be sufficiently supported, and the glass plates 1 and 2 may come into contact with each other. Accordingly, in the present embodiment, the spacers 3 are configured according to the above-described Conditions 1 and 2. Note that the spacers 3 can be fixed to the glass plates 1 and 2 with use of an adhesive or without using an adhesive as described above, but a configuration is also possible in which end portions of the spacers 3 on only one side are fixed with use of an adhesive. Also, a glass unit may include both spacers 3 that are fixed with use of an adhesive and spacers 3 that are fixed without using an adhesive.

### 6. Glass unit manufacturing method

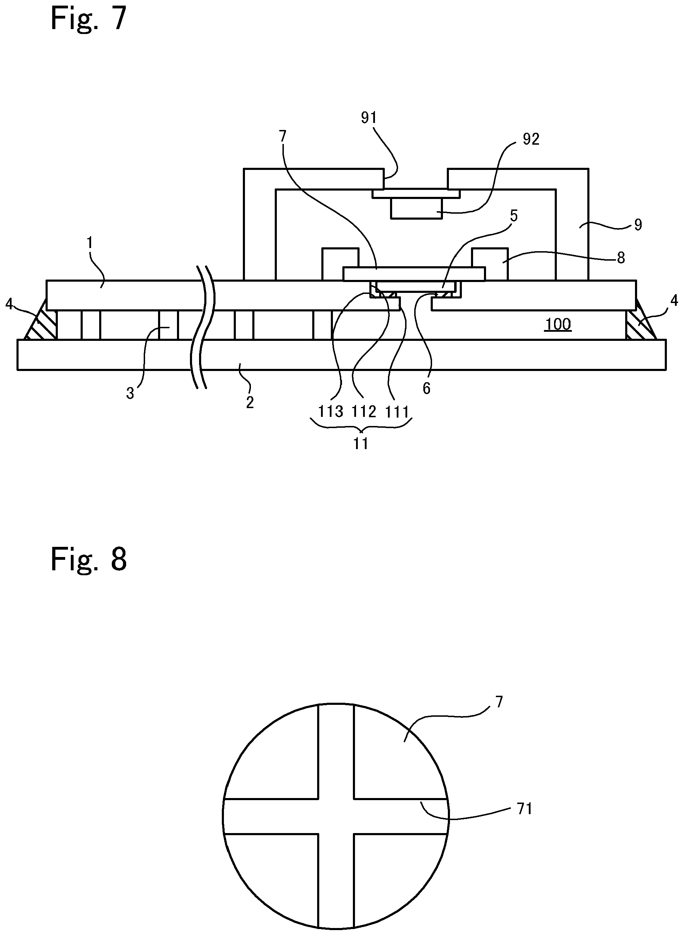

Next, a method for manufacturing the glass unit will be described. First, the structure shown in FIG. 7 is assembled. Specifically, the first glass plate 1 provided with the through hole 11 as described above and the second glass plate 2 are prepared. Next, the spacers 3 are arranged on the second glass plate 2, and then the first glass plate 1 is arranged on the spacers 3. Note that the spacers 3 may simply be arranged on the second glass plate 2 as described above, or can be fixed on the second glass plate 2 using an adhesive.

A sealing material 40 is then arranged on the peripheral edge of the second glass plate 2 so as to close the gap between the peripheral edges of the two glass plates 1 and 2. This corresponds to the sealing member 4 before it melts and solidifies.

Also, as described above, the C-shaped adhesive 6 is attached to one surface of the cover 5 by temporary firing or the like. Then, the cover 5 is attached to the through hole 11 of the first glass plate 1. At this time, the adhesive 6 is arranged on the step 113 of the through hole 11. Subsequently, the disc-shaped protective plate 7, which is larger than the large diameter portion 112 of the through hole 11, is arranged on the cover 5, and a weight 8 is further arranged on the protective plate 7. As a result, the cover 5 is pressed against the step 113 by the weight 8 via the protective plate 7.

At this time, since the adhesive 6 has been temporarily fired and solidified, it is not squashed, and the adhesive 6 forms a gap between the cover 5 and the step 113. Also, as shown in FIG. 8, a cross-shaped groove 71 is formed in the lower surface of the protective plate 7. For this reason, air flows between the internal space 100 of the glass unit and the outside through the small diameter portion 111 of the through hole 11, the discontinuous portion of the adhesive 6, the gap between the large diameter portion 112 and the cover 5, and the groove 71 of the protective plate 7.

As will be described later, due to needing to conduct heat, the protective plate 7 is preferably made of a material that has a low infrared ray absorption rate and a low coefficient of expansion when heated. For example, quartz glass or the same material as the cover 5 and the glass plates 1 and 2 can be used. Note that the protective plate 7 need only be made of a material that does not prevent the adhesive 6 from being heated by radiant heat from a later-described heater 92, and may be transparent or opaque.

The weight 8 can be shaped to press the peripheral edges of the protective plate 7 without blocking the cover 5, and may be formed in a donut shape, for example. Note that the weight 8 needs to have a shape that ensures the above-mentioned air flow path. In other words, it is necessary to have a structure in which the groove 71 of the protective plate 7 is open to the outside.

After arranging the protective plate 7 and the weight 8 in this way, a cup-shaped closing member 9 is attached to the upper surface of the first glass plate 1 so as to cover the protective plate 7 and the weight 8. Accordingly, the space surrounded by the closing member 9, including the through hole 11, is sealed. Also, an opening 91 is formed in the upper portion of the closing member 9, and the opening 91 is connected to a vacuum pump (not shown) to depressurize the internal space 100. Also, inside the closing member 9, a heater 92 made of tungsten or the like is provided above the protective plate 7, and the adhesive 6 is heated by the heater 92.

After the closing member 9 is attached in this way, the assembly is placed in a heating furnace (not shown) and heated. First, the sealing material 40 is heated to the melting point or above to melt the sealing material 40. The melted sealing material 40 enters the gap between the peripheral edges of the two glass plates 1 and 2. For example, if bismuth-based low melting point glass is used as the sealing material 40, it is heated to around 470°C. Thereafter, the temperature of the heating furnace is lowered to, for example, about 380 to 460°C, and the sealing material 40 is allowed to solidify. Since the heating temperature at this time is lower than the melting point of the adhesive 6, the adhesive 6 does not melt. Therefore, the above-mentioned air flow path is ensured. Note that there are no particular limitations on the means for heating the sealing material 40, and radiant heating, laser heating, induction heating, or the like can be adopted. In particular, if the sealing material 40 is made of a metal, induction heating can be adopted.

Subsequently, the vacuum pump is driven to reduce the pressure. Specifically, the internal space 100 is depressurized via the above-mentioned air flow path. Although there are no particular limitations on the degree of depressurization, it is preferably 50.7 KPa or less, more preferably 2. 67 Pa or less, and particularly preferably 0.1 Pa or less.

In this depressurizing step, force acts in the direction of bringing the glass plates 1 and 2 closer to each other, and the sealing material 40 is also squashed at the same time. Accordingly, voids inside the sealing material 40 can be eliminated, and therefore the leakage of gas through the sealing member 4 can be prevented. Accordingly, depressurization is preferably started at a temperature before the sealing material 40 has completely solidified, and the temperature for solidification of the sealing material described above (380 to 460°C in the above example) can be determined in consideration of this. For example, depressurization can be performed when the temperature becomes 50 to 150°C lower than the melting point of the sealing material 40. Note that if metal solder is used as the sealing material 40 for example, the sealing material 40 can be allowed to solidify regardless of the above-mentioned range of 380 to 460°C.

Following this, the heater 72 is driven to heat the adhesive 6. If the adhesive 6 is formed of bismuth-based low melting point glass for example, the temperature of the adhesive 6 is raised to about 500°C by the heater 72. Accordingly, the adhesive 6 melts, and the pressure applied by the weight 8 also helps to squash the adhesive 6. As a result, the C-shaped adhesive 6 deforms in an annular shape, and the cover 5 and the adhesive 6 airtightly seal the small diameter portion 111 of the through hole 11. In this way, the depressurized state of the internal space 100 is maintained. Thereafter, when the driving of the heater 72 is stopped and the whole assembly is slowly cooled, the sealing material 40 completely solidifies and forms the sealing member 4 that seals the gap between the peripheral edges of both glass plates 1 and 2. The above steps obtain the glass unit. Note that a device other than the heater 72 described above may be used as long as the adhesive 6 can be heated.

### 7. Characteristics

As described above, the inventors of the present invention found that the spacers 3 can be prevented from separating by configuring the spacers 3 under the above-described Conditions 1 and 2. Accordingly, it is possible to prevent the glass plates 1 and 2 from coming into contact with each other due to flexing.

Note that depending on the intended use of the glass unit and the like, the control of the variation of the heights of the spacers 3 as described above need only be performed in at least one region as described above, but the above-described control of the variation can also be performed in all regions.

Also, it is preferable that the pressure in the internal space 100 is low. This is because the higher the degree of depressurization is, the smaller the thermal transmission coefficient of the glass unit is, and the higher the heat insulating effect is.

This point was examined as follows. First, the glass units shown in Table 1 below were created by simulation.

**[Table 1]**

| | | |
|---|---|---|
| First glass plate | 0.837 | |
| corrected emissivity | | |
| Second glass plate | 0.0391 | |
| corrected emissivity | | |
| First glass plate | 3 | |
| thickness [mm] | | |
| Second glass plate | 3 | |
| thickness [mm] | | |
| Spacer diameter [mm] | 0.3 | |
| Spacer height [mm] | 0.2 | |
| Spacer pitch [mm] | 15 | |
| Temperature [K] | 283 | JIS R 3106 (19°C =292K) |
| Kogaku transmittance = 283K | | JIS R 3107 (10°C =283K) |
| Glass | 1 | |
| thermal conductivity [W/mK] | | |
| Spacer | 10 | Kogaku condition |
| thermal conductivity [W/mK] | | |
| Outdoor transmittance | 20.4 | JIS R3107 |
| Indoor transmittance | 8.6 | JIS R3107 |

Also, the thermal transmission coefficient was calculated for various pressures in the internal space for the glass units shown in Table 1 above. The results are as follows.

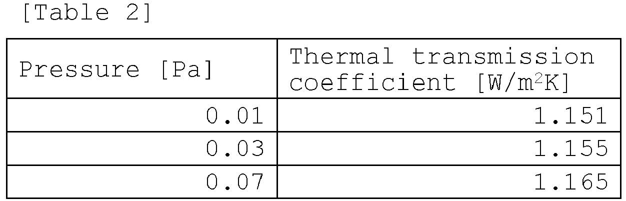

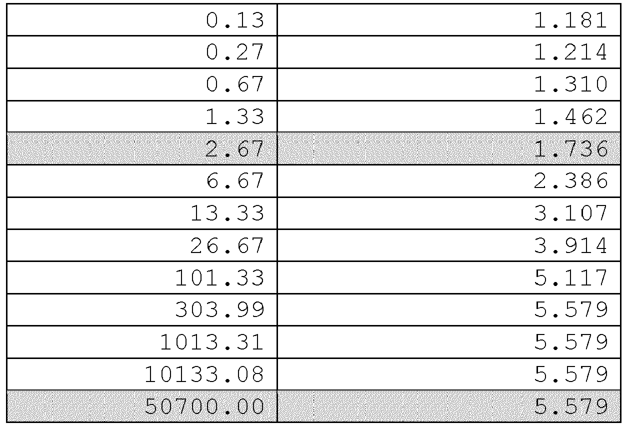

As shown in Table 2, it can be seen that the lower the pressure in the internal space is, the lower the thermal transmission coefficient of the glass unit is. In particular, when the pressure in the internal space is 2.67 Pa or less, the thermal transmission coefficient is 2.0 W/m²K or less, and it can be seen that a higher heat insulating effect can be obtained.

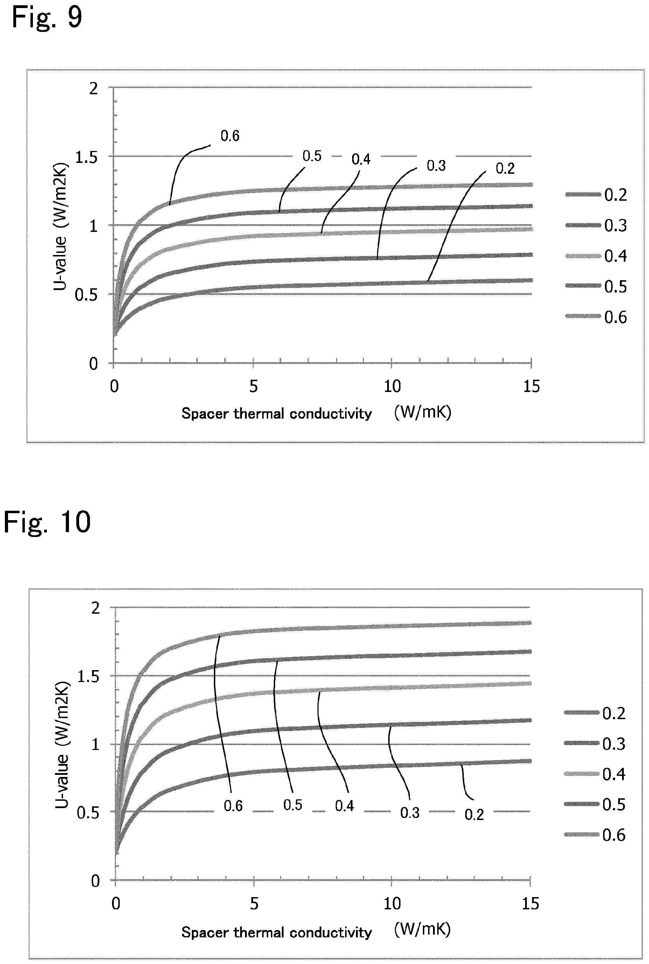

Next, the formation of condensation will be examined. FIG. 9 is a graph that shows the relationship between the thermal conductivity (horizontal axis) and the thermal transmission coefficient (vertical axis) of the spacers when the spacer pitch is 20 mm and the spacer diameter is 0.2 to 0.6 mm (5 types). On the other hand, FIG. 10 is a graph that shows the relationship between the thermal conductivity (horizontal axis) and the thermal transmission coefficient (vertical axis) of the spacers when the spacer pitch is 15 mm and the spacer diameter is 0.2 to 0.6 mm (5 types). Besides the thermal conductivity of the spacers, the conditions were the same as in Table 1, and the pressure in the internal space was 1.33 Pa or less . A comparison of FIGS. 9 and 10 shows that as the pitch of the spacers 3 decreases, the number of spacers 3 provided in the glass unit increases, and thus the thermal transmission coefficient increases and the heat insulating performance decreases. Also, an examination of FIGS. 9 and 10 shows that the thermal transmission coefficient decreases as the diameter of the spacers 3 decreases, but the thermal transmission coefficient does not change much even when the thermal conductivity of the spacers 3 increases. In other words, it can be seen that even if a material property of the spacers 3 is changed, the thermal transmission coefficient does not change significantly.

Also, in the case where the temperature inside a refrigerator is -20°C, the temperature outside the refrigerator is 25°C, and the humidity is 70% as condensation conditions, it was found that condensation forms if the thermal transmission coefficient is less than 1.2 W/m²K. Therefore, according to FIG. 9, it can be seen that if the pitch of the spacers 3 is 20 mm or more and the diameter of the spacers 3 is 0.5 mm or less, condensation does not form.

### 8. Variations

Although an embodiment of the present invention has been described above, the present invention is not limited to the above embodiment, and various modifications can be made without departing from the spirit of the present invention. Note that the following variations can be combined as appropriate.

### 8-1

In the above embodiment, the spacers 3 are arranged in a grid pattern, but as long as they can be arranged at the pitch described above, the spacers 3 are not necessarily required to be arranged in a grid pattern. Also, although the above-described provisions regarding the spacers, such as the pitch, are preferably applied to all spacers, it is permissible that the above-mentioned provisions are not satisfied by a very small number of spacers.

### 8-2

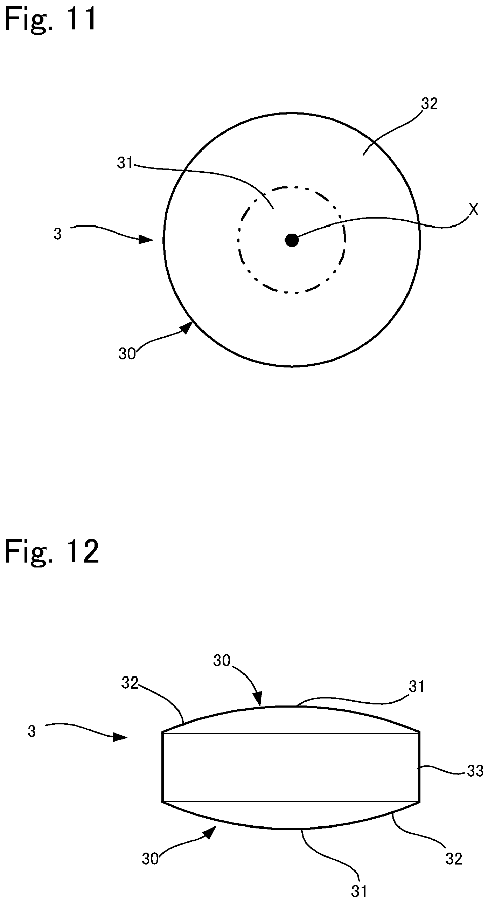

There are no particular limitations on the shape of the spacers 3 as long as a gap can be formed between the first glass plate 1 and the second glass plate 2, and the spacers 3 may have various shapes in addition to the above-mentioned circular column shape. For example, the spacer 3 shown in FIGS. 11 and 12 is formed in a disk shape, and has two end faces 30 in the axial direction (the direction from the first glass plate 1 to the second glass plate 2) and a peripheral wall face 33 that connects the two end faces 30. The end faces 30 are formed with a spherical shape that bulges toward the glass plates 1 and 2, respectively. More specifically, when viewed along a central axis X, the end faces 30 each have a contact face 31 that is circular in a plan view and is centered on the central axis X, and an annular non-contact face 32 that surrounds the contact face 31. The contact faces 21 respectively come into contact with the glass plates 1 and 2. On the other hand, the non-contact faces 32 extend radially outward from the peripheral edges of the contact faces 31, and extend diagonally so as to move away from the glass plates 1 and 2 as the distance from the contact faces 31 increases, and therefore do not come into contact with the glass plates 1 and 2 unless an external force acts on the glass plates 1 and 2.

Due to the spacer 3 having the non-contact face 32 located on the peripheral edge of the contact face 31, the contact face 21 can be made smaller. In other words, the area of contact with the glass plates 1 and 2 can be reduced. This makes it possible to reduce the thermal transmission coefficient in the glass unit.

The contact faces 31 and the non-contact faces 32 that constitute the end faces 30 of the spacers 3 are formed in a spherical shape having the same radius overall. Specifically, the radius of curvature of each end face can be, for example, 0.3 mm or more and 20 mm or less. As described above, if the radius of curvature of the contact face 31 and the non-contact face 32 is set within a predetermined range, the contact face 31 and the non-contact face 32 can be formed easily.

If the contact faces 31 are formed in a spherical shape, the pressing force that the contact faces 31 apply to the first glass plate 1 and the second glass plate 2 increases, and thus the position of the spacer 3 between the two glass plates 1 and 2 is more likely to be held. Also, if the contact faces 31 and the non-contact faces 32 have a spherical shape that has the same radius overall, the non-contact faces 32 are likely to come into contact with deformed (curved) portions of the glass plates 1 and 2. Furthermore, if the spacer 3 is molded using a mold for example, the spherical portions of the spacer 3 can be easily separated from the mold. Accordingly, the spacer 3 can be molded at low cost.

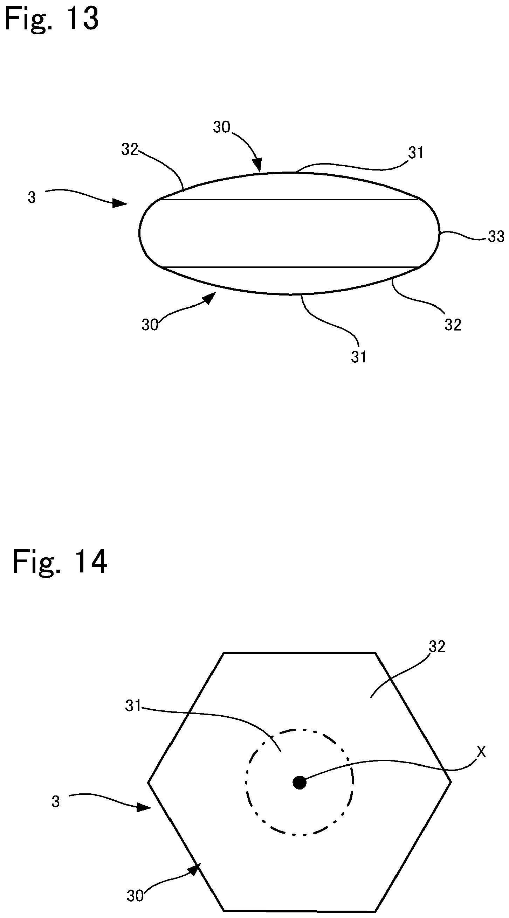

Note that although the peripheral wall face 33 extends parallel to the axial direction, it can be formed as a curved surface that protrudes in the radial direction as shown in FIG. 13 for example. Accordingly, no portion of the outer surface of the spacer 3, including the two end faces 30, is a flat surface, and therefore the spacer 3 is not held in an orientation where a flat outer surface is in contact with the first glass plate 1 or the second glass plate 2. Therefore, the spacers 3 can be easily arranged on the glass plates 1 and 2. Also, as shown in FIG. 14, the outer shape of the spacer 3 in a plan view may be a polygonal shape instead of a circular shape.

### 8-3

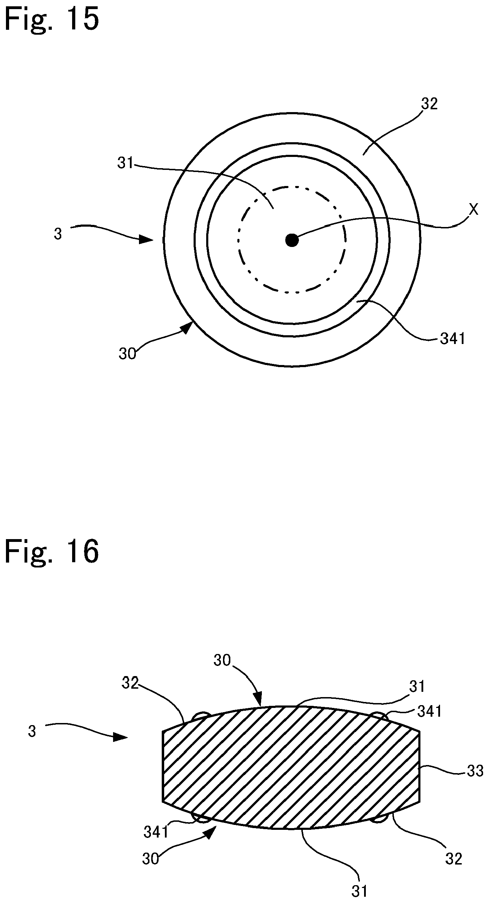

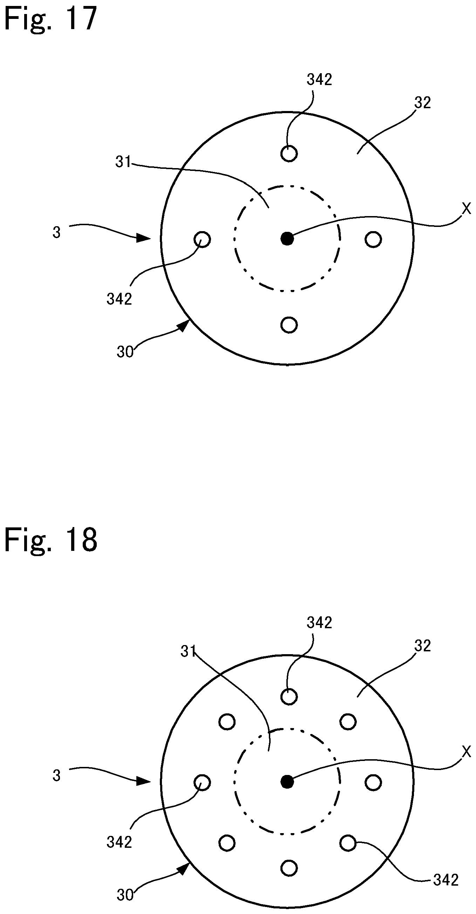

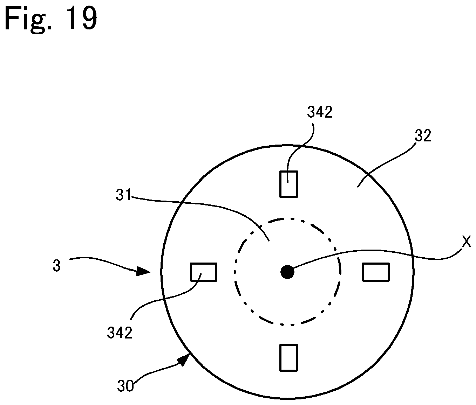

Protrusions may be provided on the non-contact faces 32 of the spacer 3 shown FIGS. 11 and 12. For example, as shown in FIGS. 15 and 16, annular protrusion portions 341 can be provided so as to surround the contact faces 31. Also, the protrusion portion does not need to be continuous, and for example, as shown in FIGS. 17 and 18, protrusion portions 342 can be provided around the contact face 31 at predetermined angles around the central axis X. In the example in FIG. 16, protrusion portions 342 are provided every 90 degrees, and in the example in FIG. 17, protrusion portions 342 are provided every 45 degrees. There are no particular limitations on the shape of the protrusion portions 342, and they may be circular in a plan view as shown in FIGS. 17 and 18, or rectangular in a plan view as shown in FIG. 19. Accordingly, there are no particular limitations on the shape, number, and position of the protrusion portions 342.

In this way, by providing the protrusion portion 341 or 342 on a portion of the non-contact face 32, the overall volume of the spacer 3 can be reduced compared with the case where the non-contact face 32 is offset toward the first glass plate 1 or the second glass plate 2 up to the position where the non-contact face 32 reaches the apex of the protrusion portion 341 or 342. The thermal transmission coefficient (U value) of the spacer 3 is proportional to the volume of the spacer 3, and therefore by shaping the spacer 3 as shown in FIGS. 15 to 19, it is possible to suppress the thermal transmission coefficient (U value) of the spacer 3. Also, reducing the volume of the spacers 3 makes it possible to reduce the material cost.

### 8-4

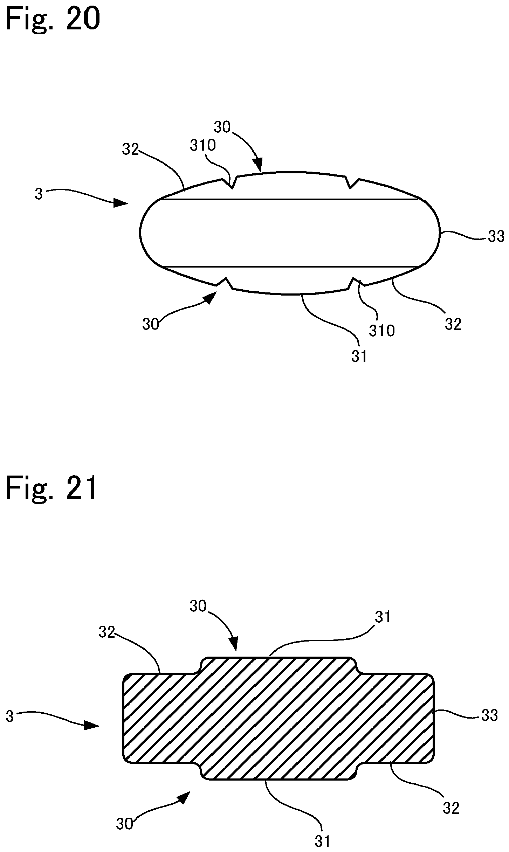

As shown in FIG. 20, a groove portion 310 may be formed in the non-contact face 32, and the contact face 31 and the non-contact portion 32 may be arranged on opposite sides of the groove portion 310. By providing the groove portion 310 in the non-contact face 32 in this way, it is possible to reduce the overall volume of the spacer 3. Accordingly, the thermal transmission coefficient (U value) of the spacer 3 can be suppressed, and the material cost can also be suppressed.

### 8-5

As shown in FIG. 21, the non-contact faces 32 may be formed by flat faces that extend along the glass plates 1 and 2. As described above, if the non-contact faces 32 are flat faces, deformed portions of the glass plates 1 and 2 are supported by the flat non-contact faces 32, and thus the impact strength of the glass unit can be increased.

### 8-6

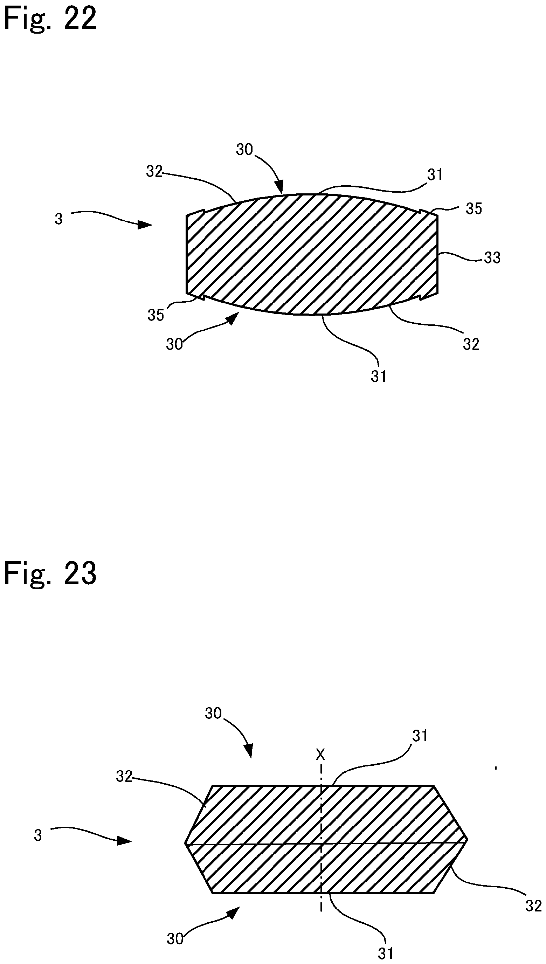

As shown in FIG. 22, protruding portions 35 that protrude toward the glass plates 1 and 2 may be formed at the outer edges of the non-contact faces 32. In other words, uneven portions may be formed on the non-contact faces.

### 8-7

As shown in FIG. 23, the contact faces 31 may be formed as flat faces, and the non-contact faces 32 may be formed by inclined surfaces that have a straight cross section. Note that the spacers 3 shown in FIGS. 11 to 23 are examples, and some or all of the configurations of the spacers 3 shown in these examples can be combined as appropriate. Also, in the case of the spacers 3 that have a shape other than a circular column, such as the spacers 3 shown in sections 8-2 to 8-7, the diameter and the cross-sectional area are defined as follows. Specifically, the diameter of the spacer 3 does not mean the outer diameter of the spacer 3, but rather means the diameter of the portion that comes into contact with the glass plate 1 or 2, and the cross-sectional area of the spacer 3 means the cross-sectional area of the portion that comes into contact with the glass plate 1 or 2.

### 8-8

In the above embodiment, the through hole 11 is formed in the first glass plate 1, the internal space 100 is depressurized, and then the cover 5 is fixed, but as long as the internal space 100 can be depressurized, there are no particular limitations on the method for forming the through hole 11. For example, a configuration is possible in which a resin or glass pipe is fixed to the through hole 11 with an adhesive, air is sucked through the pipe, and then the pipe is melted to close the through hole 11. Also, the cover 5 and the pipe may protrude from the surface of the first glass plate 1 to some extent.

### 8-9

In the above embodiment, the second glass plate 2 is formed larger than the first glass plate 1, but it may have the same shape. In this case, the sealing member 4 is introduced into the gap between the peripheral edges of both glass plates 1 and 2.

### 8-10

After the glass unit has been manufactured as described above, by arranging an interlayer film and a third glass plate on the first glass plate 1 in this order and then fixing them using a known autoclave, it is possible to form laminated glass constituted by the first glass plate 1, the interlayer film, and the third glass plate. The interlayer film can be constituted by a known resin film used for laminated glass, and the third glass plate can be constituted by a glass plate similar to the first glass plate 1.

As described above, if the cover 5 is substantially flush with the surface of the first glass plate 1, the interlayer film and the third glass plate can be stacked without the cover 5 getting in the way. Accordingly, besides using the first glass plate 1 that has been strengthened as described above, by forming laminated glass, the glass unit according to the present invention can be made into safety glass.

### 8-11

A known Low-E film can also be stacked on at least one of the first glass plate 1 and the second glass plate 2.

### 8-12

The glass unit of the present invention can be used not only as a window glass for a building where heat insulation performance is required, but also as a cover glass that is to be mounted on the outer surface of a device (e.g., a device such as a refrigerator). Also, either the first glass plate 1 or the second glass plate 2 may be arranged so as to face the outside of the device, the building, or the like to which the glass unit is to be mounted, but because the first glass plate 1 provided with the through hole 11 has a lower strength than the second glass plate 2, it is preferable to arrange the second glass plate 2 so as to face the outside.

### List of Reference Numerals

- 1: First glass plate
- 2: Second glass plate
- 3: Spacer
- 4: Sealing member

The following numbered clauses, describing aspects of our proposals, are part of the description
1. A glass unit comprising:
   a first glass plate;
   a second glass plate that is arranged facing the first glass plate with a predetermined interval therebetween and forms an internal space with the first glass plate;
   a sealing member that seals a gap at peripheral edges of the first glass plate and the second glass plate; and
   a plurality of spacers arranged between the first glass plate and the second glass plate,
   wherein the internal space has been depressurized to 50.7 KPa or less,
   the first and second glass plates each have a thickness of 5 mm or less,
   a pitch of the spacers is 15 mm or more, and
   a difference between a height of a highest spacer and a height of a lowest spacer is 0.01 mm or less.
2. A glass unit comprising:
   a first glass plate;
   a second glass plate that is arranged facing the first glass plate with a predetermined interval therebetween and forms an internal space with the first glass plate;
   a sealing member that seals a gap at peripheral edges of the first glass plate and the second glass plate; and
   a plurality of spacers arranged between the first glass plate and the second glass plate,
   wherein the internal space has been depressurized to 50.7 KPa or less,
   the first and second glass plates each have a thickness of 3.1 mm or less, and
   a pitch of the spacers is 20 mm or more.
3. The glass unit according to clause 1 or 2,
   wherein each of the spacers is in direct contact with at least one of the first glass plate and the second glass plate.
4. The glass unit according to any one of clauses 1 to 3,
   wherein the spacers each have a height of 0.1 to 0.5 mm.
5. The glass unit according to any one of clauses 1 to 4,
   wherein the internal space has been depressurized to 2.67 Pa or less.
6. The glass unit according to any one of clauses 1 to 5,
   wherein a pitch of the spacers is 20 mm or more, and the spacers each have a diameter of 0.5 mm or less.
7. The glass unit according to any one of clauses 1 to 6,
   wherein the Young's modulus of at least one spacer adjacent to the sealing member is 100 GPa or more.
8. The glass unit according to any one of clauses 1 to 7,
   wherein the spacers each have a cross-sectional area of 0.03 mm² or more.

## Claims

1. A glass unit comprising:
a first glass plate;
a second glass plate that is arranged facing the first glass plate with a predetermined interval therebetween and forms an internal space with the first glass plate;
a sealing member that seals a gap at peripheral edges of the first glass plate and the second glass plate; and
a plurality of spacers arranged between the first glass plate and the second glass plate,
wherein the internal space has been depressurized to 50.7 KPa or less,
the first and second glass plates each have a thickness of 3.1 mm or less, and
a pitch of the spacers is 20 mm or more.

2. The glass unit according to claim 1,
wherein each of the spacers is in direct contact with at least one of the first glass plate and the second glass plate.

3. The glass unit according to claim 1 or 2,
wherein the spacers each have a height of 0.1 to 0.5 mm.

4. The glass unit according to any one of claims 1 to 3,
wherein the internal space has been depressurized to 2.67 Pa or less.

5. The glass unit according to any one of claims 1 to 4,
wherein a pitch of the spacers is 20 mm or more, and the spacers each have a diameter of 0.5 mm or less.

6. The glass unit according to any one of claims 1 to 5,
wherein the Young's modulus of at least one spacer adjacent to the sealing member is 100 GPa or more.

7. The glass unit according to any one of claims 1 to 6,
wherein the spacers each have a cross-sectional area of 0.03 mm² or more.
